# EUROPEAN PATENT APPLICATION

(11) **EP 4 503 218 A2**
(43) Date of publication of application: **05.02.2025**
(21) Application number: 24192753.2
(22) Date of filing: 04.08.2024
(51) Int. Cl.: H01M 10/04, H01M 50/105

(54) **POUCH FOLDING METHOD AND DEVICE**

(30) Priority: 04.08.2023 KR 20230102010
(71) Applicant: SK On Co., Ltd., Seoul 03161 (KR)
(72) Inventor: KIM, Sung Yeop, 34124 Daejeon (KR); JEONG, Jun Hui, 34124 Daejeon (KR); CHO, Eun Soo, 34124 Daejeon (KR); CHEON, Seung Hyeon, 34124 Daejeon (KR)
(74) Representative: Stolmár & Partner Patentanwälte PartG mbB

(57) **Abstract**

Pouch folding methods and devices are disclosed. In some embodiments, a pouch folding method includes applying heat to a wing of a cell pouch to obtain a heated wing, and folding the heated wing of the cell pouch.

## Description

### PRIORITY CLAIM AND CROSS-REFERENCE TO RELATED APPLICATIONS

This patent document claims the priority and benefits of Korean Patent Application No. 10-2023-0102010, filed on Aug 4, the disclosure of which is incorporated herein by reference in its entirety.

### TECHNICAL FIELD

The disclosed technology relates to a method for folding a pouch of a secondary battery.

### BACKGROUND

Rechargeable secondary batteries have been widely used as power sources for wireless mobile electronic devices. In addition, secondary batteries are widely employed in electric vehicles (EVs) and hybrid electric vehicles (HEVs) as a solution to the air pollution problems associated with conventional gasoline and diesel vehicles that use fossil fuels.

### [Related Art Document]

### [Patent Document]

(Patent Document 1) Korean Patent Laid-Open Publication No. 10-2022-0127144 (filed on February 25, 2022)

### SUMMARY

The disposed technology can be implemented in some embodiments to provide pouch folding methods and devices for minimizing pouch damage occurring when folding a pouch, by heating and softening wings of the cell pouch before folding the wings.

In one general aspect, a pouch folding method for folding a wing of a cell pouch may include an operation of heating the wing before an operation of folding the wing.

In the operation of heating the wing, the wing may be heated using a heater, and the heater may be installed away from the wing and heat the wing in a non-contact manner.

The heater may be an induction heating heater, and induction heat the wing.

In the operation of heating the wing, the heater may heat the wing while a cell is transferred along a transfer line.

In the operation of heating the wing, the heater may heat the wing for a surface temperature of the wing to be a maximum of 220 degrees or less.

The operation of folding the wing may include a first folding operation of folding the wing by 180 degrees along a first folding line, and a second folding operation of folding the 180-degree folded wing by an additional 90 degrees along a second folding line, and the operation of heating the wing may include a first heating operation of heating the wing before the first folding operation, and a second heating operation of heating the 180-degree folded wing before the second folding operation.

In the first heating operation, the wing may be heated in the non-contact manner by using a first heater, and the first heater may locally heat a sealing part of the wing and its periphery on the first folding line.

In the second heating operation, the wing may be heated in the non-contact manner by using a second heater, and the second heater may locally heat a sealing part of the wing and its periphery on the second folding line.

In another general aspect, a pouch folding device for folding a wing of a cell pouch may include: a transfer line for transferring a cell; a folding unit installed on the transfer line, and folding the wing; and a heater installed on the transfer line and heating the wing, wherein the heater is installed in front of the folding unit, and heats the wing before the wing is folded by the folding unit.

The heater may be installed away from the wing, and heat the wing in a non-contact manner.

The heater may be an induction heating heater that induction heats the wing.

The heater may heat the wing while the cell is transferred along the transfer line.

The folding unit may include a first folding unit folding the wing by 180 degrees along a first folding line, and a second folding unit folding the 180-degree folded wing by an additional 90 degrees along a second folding line, and the heater may include a first heater installed in front of the first folding unit and heating the wing, and a second heater installed in front of the second folding unit and heating the 180-degree folded wing.

The first heater may heat the wing in the non-contact manner, and locally heat a sealing part of the wing and its periphery on the first folding line.

The second heater may heat the wing in the non-contact manner, and locally heat a sealing part of the wing and its periphery on the second folding line.

The heater may heat one end and the other end of the folding line on the wing, and heat the one end and the other end simultaneously.

Other features and aspects will be apparent from the following detailed description, the drawings, and the claims.

### BRIEF DESCRIPTION OF THE DRAWINGS

FIG. 1 is a diagram showing a fold part of a pouch-type secondary battery.
FIG. 2 is a diagram showing an example of a pouch-type battery cell.
FIG. 3 is a flow chart of an example pouch folding process.
FIGS. 4A to 4C are cross-sectional images of a pouch fold part folded by the example pouch folding process shown in FIG. 3.
FIG. 5 is a flow chart of a pouch folding method based on an embodiment of the disposed technology.
FIG. 6 is a cross-sectional image of a pouch fold part folded by the folding method based on some embodiments of the disposed technology.
FIG. 7 is a diagram for explaining a first folding line.
FIG. 8 is a diagram for explaining a second folding line.
FIG. 9 is a schematic diagram of a pouch folding device based on some embodiments of the disposed technology.
FIGS. 10A and 10B are diagrams each schematically showing a heating process by a heater.

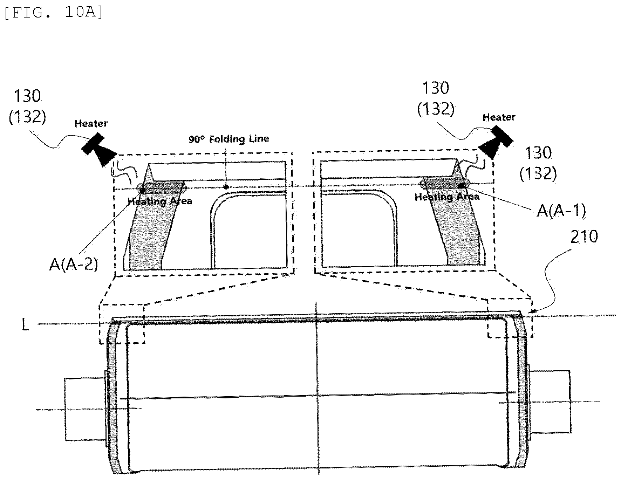

FIG. 10A is a front view of a battery cell based on some embodiments.

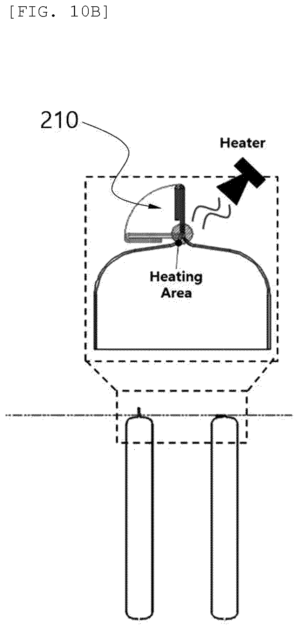

FIG. 10B is a side view of the battery cell based on some embodiments.

### DETAILED DESCRIPTION OF EMBODIMENTS

Hereinafter, the disposed technology is described with reference to the accompanying drawings.

The manufacturing process may include folding a joint part (or sealing part) of the exterior material of the battery cell, for example, folding the sealing part of the exterior material toward the body of the battery cell. Since the area of the sealing part of the battery cell can be very small compared to the overall size of the battery cell, it may be difficult to fold the sealing part to the desired position, and the cell may be damaged during the folding process, resulting in a battery cell defect.

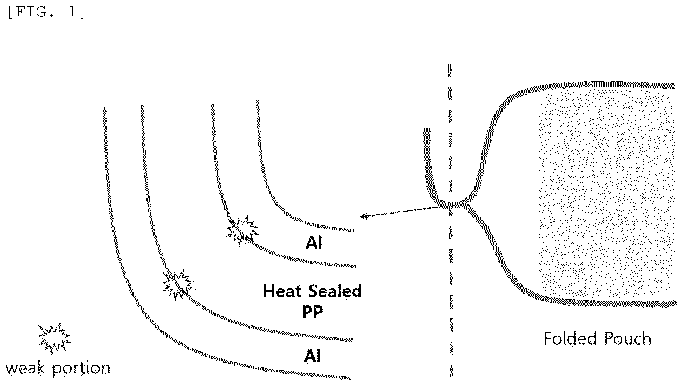

FIG. 1 is a diagram showing a fold part of a pouch-type secondary battery. Here, the pouch may be a multilayer film made of polyethylene terephthalate (PET)/nylon/aluminum (Al)/polypropylene (PP). When an external force (e.g., tension or compression) is applied to the pouch, such as during the pouch folding process, delamination or interfacial pores may occur in the pouch due to differences in stretch rates between the layers included in the pouch, which may act as a factor in lowering its quality.

The disclosed technology can be implemented in some embodiments to provide pouch folding methods and devices for folding a pouch that can minimize damage occurring during the folding process by heating and softening the wings of the cell pouch before folding them.

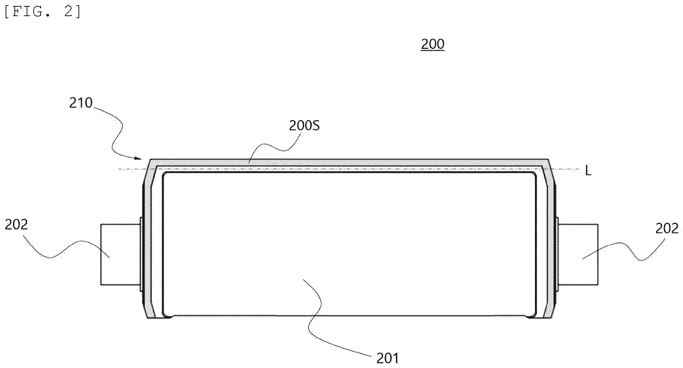

FIG. 2 is a diagram showing an example of a pouch-type battery cell. In some implementations, a pouch-type battery cell 200 may have an electrode assembly disposed in a pouch, which is an exterior material, and sealed edges of three or four sides of the pouch.

In some implementations, the pouch-type battery cell 200 may have electrode tabs 202 disposed on one end and the other end, respectively, in the longitudinal direction. In some implementations, wings 210 are disposed on one end in the short axis where the electrode tab 202 is not formed (a side part of the pouch-type battery cell 200 in a long axis of the pouch-type battery cell 200). In one example, the wings 210 extend from a main room 201 where the electrode assembly is disposed and protrude outward by a predetermined size, and a sealing part 200S is formed by sealing an outer portion of a pouch.

In some implementations, in this example cell structure, the wings 210 may be folded to improve the robustness of the battery cell and the energy density of a battery module. In some implementations, the above-discussed process can be referred to as a folding process of the cell or the pouch.

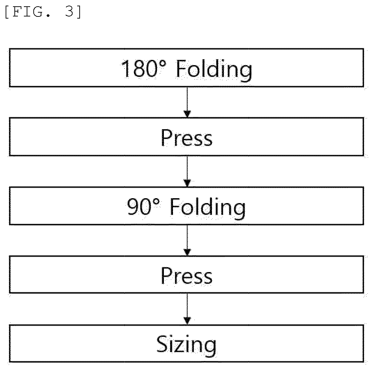

FIG. 3 is a flow chart of an example pouch folding process. The process may include folding the wing of the pouch by 180 degrees, pressing the wing to fix a shape of the 180-degree folded wing, further performing additional 90 degree-folding (also referred to as 270-degree folding), pressing the wing to fix a shape of the additional 90-degree folded wing, and then adhering the folded wing to the main room of the battery cell by using a sizing roller.

However, as described above, the pouch may be a multilayer film, and thus may be directly or indirectly damaged when physically folded by an external force. In particular, when the pouch is folded along a folding line L as shown in FIG. 2, the sealed part 200S and unsealed part of the pouch may be folded simultaneously due to the cell structure. However, due to differences in thickness between different areas and due to physical properties of polypropylene (PP) layers, a boundary between the sealed part 200S and unsealed part of the pouch may be most vulnerable to damage, and may act as a starting point where cell quality abnormalities begin.

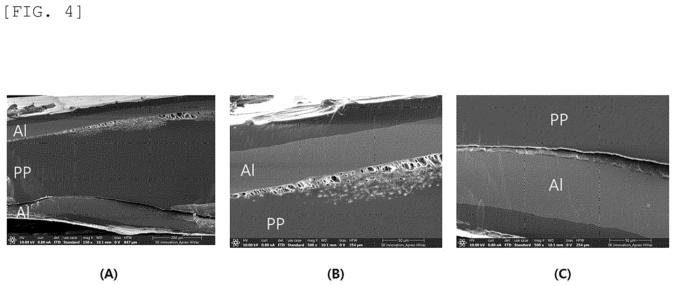

FIGS. 4A to 4C are cross-sectional images of a pouch fold part folded by the example pouch folding process shown in FIG. 3. FIG. 4A is a cross-sectional scanning electron microscope (SEM) image of the pouch folding part, FIG. 4B is an enlarged image of an aluminum (Al)/polypropylene (PP) interface, and FIG. 4C is an enlarged image of a PP/Al interface. As shown in the drawings, it may be seen that a pore occurs at the Al/PP interface and delamination occurs at the PP/Al interface.

To address these issues, in some embodiments of the disposed technology, a heat can be applied to the wing before being folded. In some embodiments, the pouch folding method may include various operations as will be discussed below.

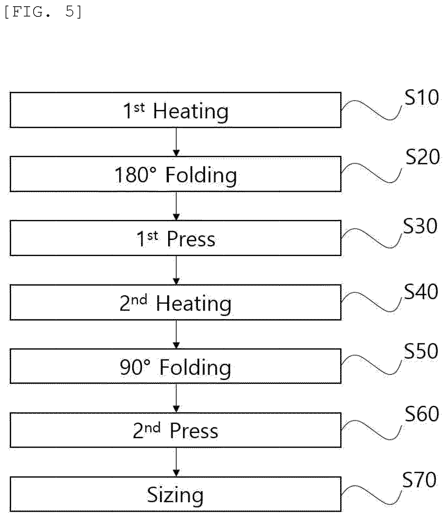

FIG. 5 is a flow chart of a pouch folding method based on an embodiment of the disposed technology. In some implementations, the method may include applying heat to the wing of the pouch before folding the wing.

In some implementations, the method may include a first heating operation (S10) of heating the wing before folding the wing by 180 degrees, a 180-degree folding operation (S20) of folding the heated wing by 180 degrees, a first press operation (S30) of pressing the 180-degree folded wing, a second heating operation (S40) of heating the wing before folding the 180-degree folded wing by the additional 90 degrees after performing the first press (S30), a 90-degree folding operation (S50) of folding the heated wing by an additional 90 degrees, a second press operation (S60) of pressing the wing folded by the additional 90 degrees, and a sizing operation (S70) of adhering the folded wing to the main room of the battery cell by using the sizing roller.

In some embdiments of the method of the disposed technology, the wing may be heated using a heater in the first heating operation (S10) or the second heating operation (S40), that is, the operation of heating the wing before folding the wing. Here, the heater may be spaced away from the wing, and heat the wing in a non-contact manner.

The heater may be an induction heating heater, and may induction heat the wing. The induction heating may be one method of performing electrical heating, and may be a heating method using a principle that an eddy current is generated in a metal to be heated when a current is supplied to an induction heating coil, and a temperature of the metal is increased due to Joule heat generated by resistance of the metal. The induction heating heater may include an electromagnet and the induction heating coil, and may be operated by a high-frequency alternating current applied to this coil.

In this way, the wing may be heated in the non-contact manner using the induction heating heater or other types of heater to reduce or minimize the pouch damage, compared to a conventional method of using a press to form the folding line on the wing. In addition, the pouch may be stretched by the heating before folding the wing, and the above-mentioned defect in the pouch may thus be reduced when folding the wing.

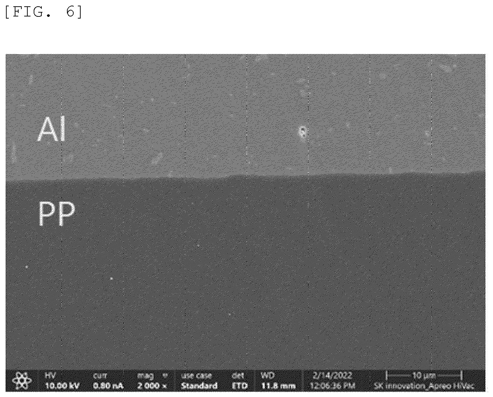

FIG. 6 is a cross-sectional image of a pouch fold part folded by the folding method implemented base on some embodiments of the disposed technology. Referring to FIG. 6, the pores or the delamination, occurring at the Al/PP interface, are reduced compared to the process of FIG. 4.

Further, in some embodiments of the disposed technology, the method of heating the pouch may be performed in the non-contact manner, thereby performing the heating simultaneously while transferring the cell without stopping the cell transfer. That is, in some examples, the cell transfer may be required to be stopped in order to press the wing. On the other hand, in some embodiments of the disposed technology, the pouch may be heated in a non-contact manner without requiring the cell transfer to stop. As a result, it is possible to reduce a cell manufacturing time and improve an overall folding process. Furthermore, the method based on some embodiments of the disposed technology may be easily applied to conventional pouch folding equipment already installed.

In the operation of heating the wing, that is, in each of the first heating operation (S10) and the second heating operation (S40), the wing may be heated for a surface temperature of the wing to reach a maximum of 220 Celsius degrees. Thermal deformation of a polyethylene terephthalate (PET) layer, which is an outer layer of the pouch, may occur when the surface temperature of the pouch is 220 degrees Celsius or more. In some implementations, these issues can be addressed by, for example, appropriately adjusting the output or heating time of the heater, a separation distance between the heater and the pouch, or others.

In some implementations, in the pouch, the sealing part may have higher rigidity than the unsealed part. Accordingly, the sealing part may be stretched for smooth folding. On the other hand, the unsealed part may have relatively low rigidity, and therefore, there is no need to separately stretch the sealing part. That is, in some implementations, the sealing part of the pouch is intensively heated. In some implementations of the disposed technology, the sealing part and its periphery may be locally heated. The periphery may refer to a predetermined region adjacent to the sealing part, and locally heating the sealing part and its periphery may refer to heating a heating region on the wing that has a width and a length wider and longer than the sealing part. In one example, the folding line on the sealing part, and the folding line of the sealing part may be included in the heating region.

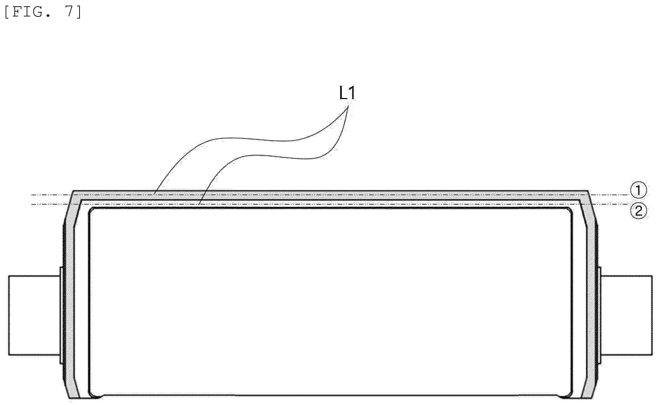

FIG. 7 is a diagram for explaining a first folding line. Referring to FIG. 7, when a line where the wing is folded by 180 degrees is referred to as a first folding line L1, the first folding line may be formed (□) along the sealing part of the wing, or formed (□) along the unsealed part of the wing. Here, heating may be achieved along the entirety of the first folding line L1 when the first folding line is formed (□) along the sealing part of the wing. On the other hand, the sealing part at the side part of the short axis and its periphery may be locally heated without heating the unsealed part of the wing when the first folding line is formed (□) along the unsealed part of the wing.

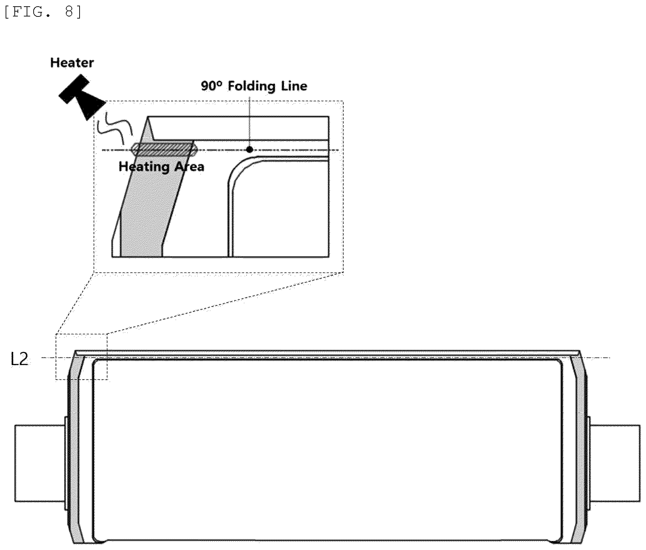

FIG. 8 is a diagram for explaining a second folding line. Referring to FIG. 8, when the line where the wing is folded by the additional 90 degrees is referred to as a second folding line L2, the second folding line L2 may be generally formed along the unsealed part of the wing. Accordingly, the sealing part at the side part of the short axis and its periphery may be locally heated without heating the unsealed part of the wing.

Limiting the heating region in this way may minimize unnecessary damage, in more detail, the unnecessary damage to the unsealed part, and unnecessary heating to the pouch that occurs due to the heating, and simultaneously reduce wasted output of the heater by optimizing the heating region.

In some embodiments of the disposed technology, the pouch folding device may be implemented as follows.

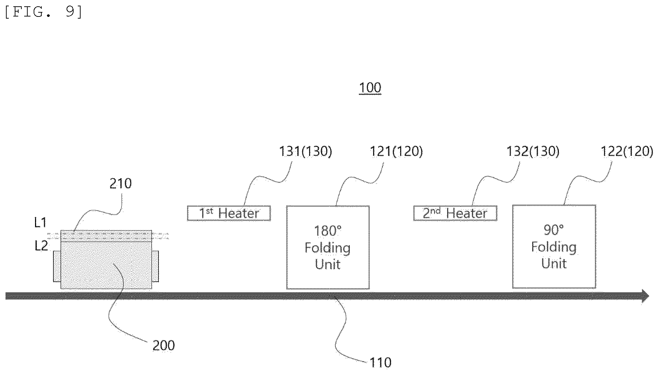

FIG. 9 is a schematic diagram of a pouch folding device based on some embodiments of the disposed technology. In some embodiments, the device may include: a transfer line 110 for transferring the cell, a folding unit 120 installed on the transfer line, and folding the wing 210 of the pouch in the cell 200; and a heater 130 installed on the transfer line, and heating the wing 210 of the pouch in the cell 200.

The heater 130 may be installed in front of the folding unit 120, and heat the wing 210 before the wing 210 is folded by the folding unit 120.

Here, the heater 130 may be installed away from the wing 210, and heat the wing 210 in the non-contact manner. As a specific means, the heater 130 may be an induction heating heater that induction heats the wing 210.

In addition, the heater 130 may heat the wing 210 while the cell 200 is transferred along the transfer line 11.

Referring again to FIG. 9, the folding unit 120 may include a first folding unit 121 folding the wing 210 by 180 degrees along the first folding line L1, and a second folding unit 122 folding the 180-degree folded wing 210 by the additional 90 degrees along the second folding line L2. The heater 130 may include a first heater 131 installed in front of the first folding unit 121 and heating the wing 210, and a second heater 132 installed in front of the second folding unit 122, and heating the 180-degree folded wing 210.

The first heater 131 may heat the wing 210 in the non-contact manner, and locally heat the sealing part and its periphery on the first folding line L1 of the wing 210.

The second heater 132 may heat the wing 210 in the non-contact manner, and locally heat the sealing part and its periphery on the second folding line L2 of the wing 210.

FIGS. 10A and 10B are diagrams each schematically showing a heating process by the heater. FIG. 10A is a front view of the cell, and FIG. 10B is a side view of the cell.

As shown in the drawings, the heater 130 may be installed away from the wing 210 of the cell 200, heat the wing 210 in the non-contact manner, and locally heat the sealing part and its periphery A on the wing 210.

Here, two or more heaters 130 may be installed, and simultaneously heat one region A-1 and the other region A-2 of the wing 210, that is, the sealing part at one end of the wing 210 and its peripheral region A-1 and the sealing part at the other end of the wing 210 and its peripheral region A-2. Here, installing two or more heaters may indicate a heating part of the heater that is divided into two parts rather than two physically separate devices. That is, installing two or more heaters may include the case where of installing a single heater device including two or more heating parts.

Alternatively, although not shown separately in the drawings, one heater 130 may be provided, and heat one region of the wing, that is, the sealing part at one end of the wing 210 and its peripheral region A-1 that the heater first meets in a transfer direction of the cell 200, and then heat the sealing part at the other end of the wing 210 and its peripheral region A-2 that the heater sequentially meets in accordance with the transfer of the cell 200.

FIG. 10 shows a structure of the second heater 132, and the first heater 131 may also include the same structure. In addition, although not shown in the drawings, the first folding line L1 may be formed along the sealing part of the wing 210 as described above. In this case, the first heater 131 may also have a long bar shape corresponding thereto, and be installed to be parallel to the wing 210, thus simultaneously heating the entire sealing part of the wing 210.

As described above, in some embodiments of the disposed technology, the wings may be heated to be soft before folding the wings of the cell pouch to thus reduce the pouch damage caused by the folding. Simultaneously, the wing may be heated in the non-contact manner by using the induction heating heater or the like, thus not requiring the cell transfer stop. As a result, it is possible to improve the work time and the overall process, and some embodiments of the disposed technology may thus be easily applied to the conventional pouch folding equipment.

As set forth above, in some embodiments of the disposed technology, it is possible to minimize the pouch damage occurring when folding the pouch, by heating and softening the wings of the cell pouch before folding the wings.

In addition, in some embodiments of the disposed technology, the method of heating the pouch is performed in the non-contact manner. Accordingly, it is possible to perform the heating simultaneously with the cell transfer without requiring the cell transfer stop. As a result, it is possible to reduce the cell manufacturing time and improve the overall folding process, thus allowing some embodiments of the disposed technology to be easily applied to the conventional pouch folding equipment.

Only specific examples of implementations of certain embodiments are described. Variations, improvements and enhancements of the disclosed embodiments and other embodiments may be made based on the disclosure of this patent document.

## Claims

1. A pouch folding method, comprising: applying heat to a wing of a cell pouch to obtain a heated wing; and
folding the heated wing of the cell pouch.

2. The method of claim 1, wherein applying heat to the wing of the cell pouch includes applying heat to the wing of the cell pouch by using a heater,
wherein the heater is spaced apart from the wing and applies heat to the wing in a non-contact manner.

3. The method of claim 2, wherein the heater is an induction heating heater configured to heat the wing using induction.

4. The method of claim 2 or 3, wherein applying heat to the wing of the cell pouch includesapplying heat to the wing using the the heater while a cell is transferred along a transfer line.

5. The method of any of claims 2 to 4, wherein applying heat to the wing of the cell pouch includes increasing a surface temperature of the wing to a maximum of 220 degrees by applying heat to the wing.

6. The method of any of claims 2 to 5, wherein folding the heated wing of the cell pouch includes:
a first folding operation to fold the wing by 180 degrees along a first folding line; and
a second folding operation to fold the 180-degree folded wing by an additional 90 degrees along a second folding line, and
wherein applying heat to the wing of the cell pouch includes:
a first heating operation to heat the wing before the first folding operation; and
a second heating operation to heat the 180-degree folded wing before the second folding operation.

7. The method of claim 6, wherein the first heating operation includes:
applying heat to the wing in the non-contact manner by using a first heater,
wherein the first heater locally heats a sealing part of the wing and a periphery region of the sealing part on the first folding line.

8. The method of claim 6 or 7, wherein the second heating operation includes:
applying heat to the wing in the non-contact manner by using a second heater,
wherein the second heater locally heats a sealing part of the wing and a periphery region of the sealing part on the second folding line.

9. A pouch folding device for folding a wing of a cell pouch, the device comprising:
a transfer line configured to transfer a cell;
a folding unit disposed on the transfer line and configured to fold the wing; and
a heater disposed on the transfer line and configured to apply heat to the wing,
wherein the heater is disposed in front of the folding unit, and configured to apply heat to the wing before the wing is folded by the folding unit.

10. The device of claim 9, wherein the heater is spaced apart from the wing, and heats the wing in a non-contact manner.

11. The device of claim 9 or 10, wherein the heater is an induction heating heater that heats the wing using induction.

12. The device of any of claims 9 to 11, wherein the heater heats the wing while the cell is transferred along the transfer line.

13. The device of any of claims 9 to 12, wherein the folding unit includes
a first folding unit configured to fold the wing by 180 degrees along a first folding line, and
a second folding unit configured to fold the 180-degree folded wing by an additional 90 degrees along a second folding line, and
the heater includes
a first heater disposed in front of the first folding unit and configured to heat the wing, and
a second heater disposed in front of the second folding unit and configured to heat the 180-degree folded wing.

14. The device of claim 13, wherein the first heater is configured to:
apply heat to the wing in the non-contact manner; and
locally apply heat to a sealing part of the wing and its periphery on the first folding line.

15. The device of claims 13 or 14, wherein the second heater is configured to:
apply heat to the wing in the non-contact manner; and
locally apply heat to a sealing part of the wing and its periphery on the second folding line.

16. The device of any of claims 9 to 12, wherein the heater heats one end and the other end of the folding line on the wing, and
heats the one end and the other end simultaneously.
